# EUROPEAN PATENT APPLICATION

(11) **EP 0 920 802 A1**
(43) Date of publication of application: **09.06.1999**
(21) Application number: 98610041.0
(22) Date of filing: 28.10.1998
(51) Int. Cl.: A01M 21/04

(54) **A portable weed killing apparatus**

(30) Priority: 09.12.1997 DK 142897
(71) Applicant: Fiskars Danmark A/S, 8600 Silkeborg (DK)
(72) Inventor: Lauridsen, erik Thoro, Lindved, 7100 Vejle (DK)
(74) Representative: Joergensen, Bjoern Barker

(57) **Abstract**

The weed killing apparatus comprises a steam generator, a mouthpiece (6) and a tube connection (7 to 9) connecting the steam generator and the mouthpiece (6) to direct steam from the former to the latter. The mouthpiece (6) comprises a chamber (11) with an opening (13) and a steam outlet (10) directing steam into the chamber (11) near the opening (13).

## Description

The present invention relates to a portable weed killing apparatus comprising a steam generator, a mouthpiece and a tube connection connecting the steam generator and the mouthpiece to direct steam from the former to the latter.

In weed killing or control of undesired plant growth it is known to apply thermal energy to the above ground parts of a plant. It is in this connection known to scorch the above ground parts of the plant by means of a gas torch or to high-pressure flush them by hot water. These two known methods suffer both from drawbacks. The use of a gas torch thus entails the risk of fire, and the use of hot water requires as a minimum half a liter of water per square meter in order to attain the desired effect.

The object of the present invention is to provide a portable apparatus which does not suffer from the drawbacks inherent in the prior art.

Various apparatuses are known for killing weed by means of steam. Common to these known apparatuses is that they direct steam in one or more jets from above and down towards the weed and the ground, whereby a big amount of steam is wasted, as it heats the ground instead of the weed. A portable weed killer with a conical screen and nozzles at the top of the screen is thus known from GB-A-2 122 511. According to this publication almost boiling water is preferably used instead of steam, which is mentioned as a theoretical, but not advisable possibility.

NZ-A-237 524 discloses a weed killer using steam which is ejected through a hand-held nozzle, on which a means not described in detail may be mounted in order to extend the time of contact between steam and weed.

SE-B-468 497 describes a weed killing device on wheel, which device is pushed manually and in which steam is ejected from nozzles in the top of a downwards opening chamber.

The object is met by means of a portable weed killing apparatus of the type mentioned by way of introduction, which apparatus is characterized in that the mouthpiece comprises a chamber with an opening and a steam outlet directing steam into the chamber near the opening. By directing the steam into the chamber near the opening, preferably in the lower three quarters of the chamber, further preferably in the lower half of the chamber and more preferred in the lower quarter of the chamber, is obtained that the steam may be ejected comparatively slowly and not in a solid downwards directed jet, of which a big part risks hitting the ground and becoming absorbed thereby, but still the hot steam reaches the weed for heating. The mouthpiece has an exterior wall, in which the opening is provided, and the chamber extends from the opening into the mouthpiece.

In a preferred embodiment the steam outlet is positioned in a side wall of the chamber.

The steam is preferably directed into the chamber under an acute angle, preferably 0 to 25° and more preferred 10 to 15°, relative to the plane of the opening. In this way the steam is with more certainty prevented from hitting the ground and being absorbed thereby.

According to the last-named embodiment two steam outlets may be positioned opposite one another to direct steam out along their respective axes, which axes intersect in or near a middle plane in the opening. In a variant of this embodiment the steam outlet is designed as a slit extending circumferentially along the opening and being possibly intermittent.

The chamber extends to a certain degree into the mouthpiece, preferably 7 to 15 cm and in particular approx. 10 cm, to be able to take up the top of weeds to be killed.

The opening area is suitably less than 120 cm², preferably approx. 75 cm².

The steam generator may suitably have a heat source, the effect of which is less than 2.2 to 2.4 kW, and which is an electric heating element, preferably intended for mains supply, or a burner, preferably a gas burner.

When in operation the mouthpiece is passed across an area with undesired plant growth, the opening of the chamber facing downwards towards the area. A part of the steam flowing into the chamber will, as the steam is lighter than the atmospheric air, ascend in the chamber, and as the chamber, apart from the opening and the steam outlet, is at least substantially closed, another part of the steam will be forced out through the opening towards the area with undesired plant growth. In this manner weed, which is present just below the opening or which extends through the opening into the chamber, will be scorched by saturated steam during the use of the apparatus, the cells of the plant parts bursting such that the sap flows out of them, which makes them wither in the course of 2 to 8 days, typically 4 days, after the scorching.

The invention will be explained in detail in the following by means of an example of an embodiment with reference to the schematic drawing, in which
Fig. 1 shows a portable weed killing apparatus seen from the side,
Fig. 2 is a sectional view through the mouthpiece of the weed killing apparatus,
Fig. 2a an enlarged detail from Fig. 2, and
Fig. 3 shows the contour of the opening in the mouthpiece.

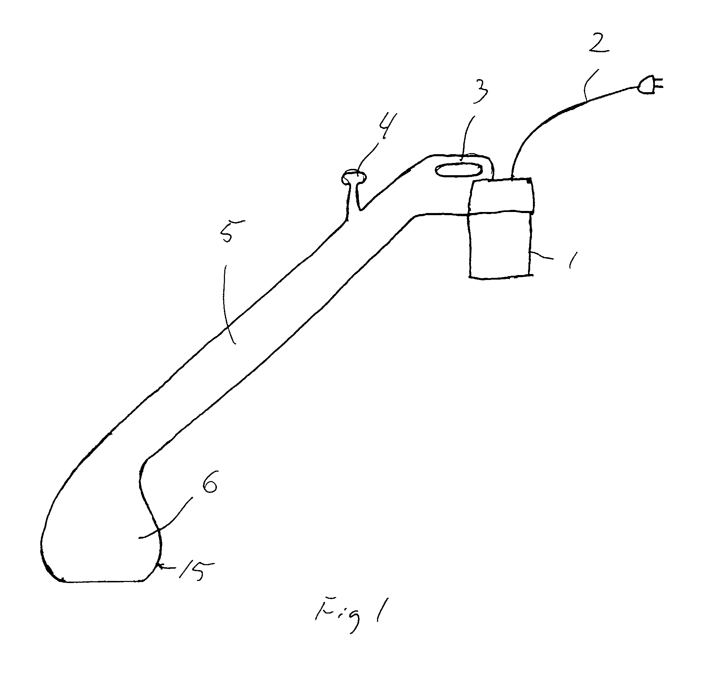

The weed killing apparatus shown in Fig. 1 comprises a steam generator in the form of an electric boiler with a reservoir 1, a connection wire 2 for the mains, handles 3 and 4, a hollow shaft 5 and a mouthpiece 6 with an exterior wall 15.

The steam generator may suitably be of a construction which is similar to the one known from commercially available domestic electric boilers and may comprise an electric heating element, an electric switch which may be designed as a dead man's grip, and a thermal safety cutout which disconnect the current, when the boiler is boiled dry. The steam generator need not comprise a steam breaker which disconnect the current, when the water is boiling, but such steam breaker would be applicable in connection with the above-mentioned dead man's grip. In this way it will be possible to switch on the contact after water fill, and not until the water is boiling will the functioning of the switch as a dead man's grip be established as the steam breaker tries to disconnect the current. From the top of the steam generator a tube extends (Fig. 2) directing the generated steam through the shaft 5 to the mouthpiece 6. When in use, the reservoir 1 is tightly closed apart from an inlet to the tube 7, such that generated steam will be pushed through the tube.

In the mouthpiece 6 the tube 7 is connected with a branch piece 8, to which two further branched tubes 9 are connected, said tubes leading to respective steam outlets 10 in a chamber 11, which through an opening 13 in the exterior wall 15 is connected with the environment. The tube 7 and the branched tubes 9 may suitably have an internal diameter of approx. 9 to 10 mm from inlet to outlet in order to ensure that no substantial pressure drop exists between the reservoir 1 and the chamber 11. Instead of one branched tube 7 to 9 several, for instance two, tubes may be used, said tubes extending all the way from the boiler or the steam generator to the chamber 11. Such tubes may for instance have an interior diameter of approx. 7 mm.

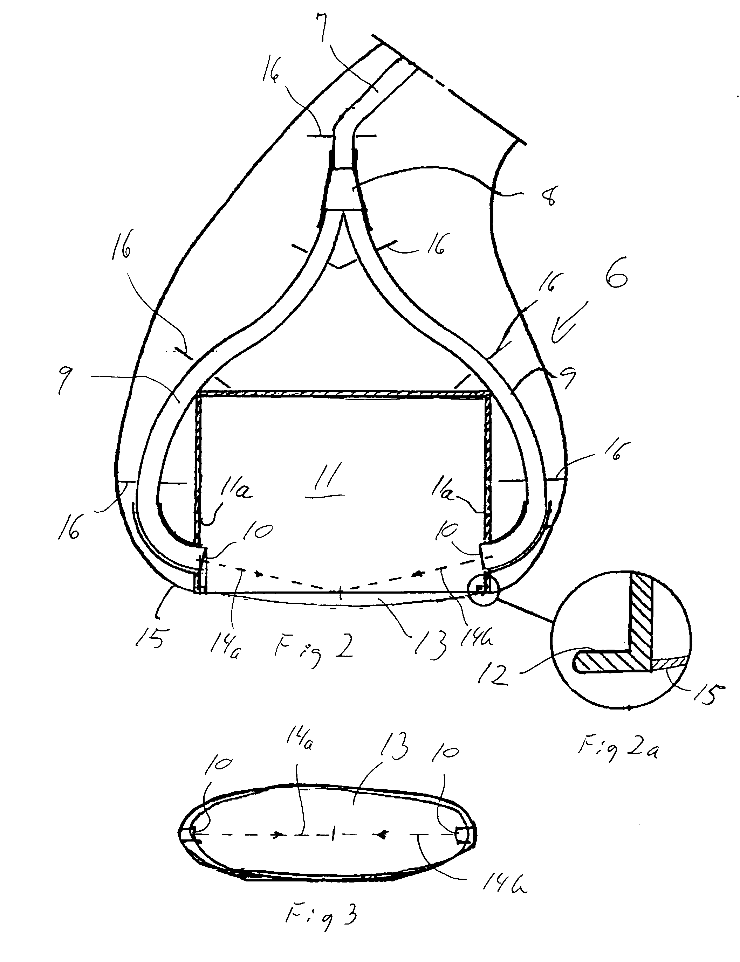

The chamber 11 is substantially cylindrical with an elongate, in the case shown, rather elliptical cross section. The chamber 11 is closed at the top and is apart from a small circumferential edge 12 (see Fig. 2a), which is mostly provided for reasons of strength, completely open downwards, such that the opening 13 (Fig. 3) corresponds to the cross section of the chamber 11. The chamber may, however, also have a bigger cross section than the opening, which may also have other shapes than the one shown, for instance rectangular. The height of the chamber is preferably between 7 and 15 cm, for instance 10 cm, to allow the tops of weed to extend into the chamber.

The steam outlets 10 extend through the side walls 11a of the chamber and have middle axes 14a, 14b extending under an acute angle relative to the plane of the opening 13 and intersecting one another in the middle of the chamber in or near the plane of the opening 13, possibly below said plane, i.e. outside the chamber 11.

By this design of the steam outlets a retardation is obtained of the discharged steam, which will therefore spread from the centre of the opening. A part of the steam will flow upwards in the chamber, as it is lighter than atmospheric air. Plant parts, which during use extend into the chamber, will thereby be scorched by the steam, which will condense on their surface. Another part of the steam will be forced out of the chamber, thereby creating a hot zone with saturated steam below the chamber, which brings about a scorching of plant parts too which are present below the chamber. Practical tests have shown that by the embodiment shown, a temperature of up to 90°C can be obtained in a distance of 4 cm downwards from the opening 13 of the chamber 11.

The effect of the heating element is preferably 2.2 to 2.4 kW, and for this effect an opening 13 with an area of 75 cm² is adequate. The opening is elongate and is in use moved in its longitudinal direction, whereby a treatment period of approx. 1 to 3 seconds is obtained, for instance 1.5 seconds at a temperature above 80°C, which is sufficient for destroying the cells of the plant parts, which makes them dry out and wither in the course of a few days after the treatment.

The reservoir 1, the shaft 5, the handles 3, 4 and the mouthpiece 6 may be moulded from a suitable knock-proof plastic and the tubes 7, 8, 9 may be secured in the shaft and the mouthpiece by moulded ribs 16 and may also be made from a suitable plastic which will provide a certain thermal insulation of the steam to prevent big amounts of steam from condensing on account of thermal loss. It has, however, turned out that the construction outlined above provides a sufficient insulation.

The apparatus works in the following way:

The reservoir is filled with water (0.5 to 2 l), and the current is switched on. In the course of a few minutes, the water will start boiling, and the steam generated thereby will be driven through the tube 7 to the mouthpiece.

The mouthpiece is moved closely across the surface of an area, from which it is desired to remove weed.

The steam is on account of the cooling, which inevitably sets in during the transport from the boiler to the mouthpiece, saturated and contains some condensed, fog-like water and has a considerable scorching effect.

As no nozzles or throttling is provided, i.e. constrictions at any point, in the tube from the boiler to the mouthpiece, no calcification will take place, for which reason there is no risk that an excess pressure will form in the boiler on account of clogging of the tube.

When a pause is made, the heat source is switched off.

When the water in the reservoir 1 of the boiler is boiled away, the thermal cutout will disconnect the current automatically, which will be noted by the user, who takes it as a sign that filling is needed for further operation.

When new water is supplied, the thermal cutout is cooled and will then switch on. This switching on may be supported by a reset-button.

## Claims

1. A portable weed killing apparatus comprising a steam generator (1), a mouthpiece (6) and a tube connection (7 to 9) connecting the steam generator (1) and the mouthpiece (6) to direct steam from the former to the latter, **characterized** in that the mouthpiece (6) comprises a chamber (11) with an opening (13) and a steam outlet (10) directing steam into the chamber (11) near the opening (13).

2. A weed killing apparatus according to claim 1, **characterized** in that the steam outlet (10) is positioned in the lower three quarters of the chamber (11), preferably in the lower half and more preferred in the lower quarter of the chamber (10).

3. A weed killing apparatus according to claim 1 or 2, **characterized** in that the steam outlet (11) is positioned in a side wall of the chamber (10).

4. A weed killing apparatus according to claims 1-3, **characterized** in that the steam is directed into the chamber (11) under an acute angle, preferably 0 to 25° and more preferred 10 to 15°, relative to the plane of the opening (13).

5. A weed killing apparatus according to claims 1 to 4, **characterized** in that the two steam outlets (10) are positioned opposite one another to direct steam out along their respective axes (14a, 14b), which axes (14a, 14b) intersect in or near a middle plane in the opening (13).

6. A weed killing apparatus according to claim 5, **characterized** in that the two axes (14a, 14b) intersect substantially in the plane of the opening (13) or outside the opening.

7. A weed killing apparatus according to claims 1 to 3, **characterized** in that the steam outlet is designed as a slit extending circumferentially along the opening and being possibly intermittent.

8. A weed killing apparatus according to claims 1 to 7, **characterized** in that the chamber extends to a certain degree into the mouthpiece (6), preferably 7 to 15 cm and in particular approx. 10 cm, to be able to take up the top of weeds to be killed.

9. A weed killing apparatus according to claims 1 to 8, **characterized** in that the opening is elongate, preferably with a length/width ratio in the range of 4.5 to 2.5.

10. A weed killing apparatus according to claims 1 to 9, **characterized** in that the opening area is less than 120 cm², preferably approx. 75 cm².

11. A weed killing apparatus according to claims 1 to 10, **characterized** in that the steam generator (1) has a heat source, the effect of which is less than 2.2 to 2.4 kW, and which is an electric heating element, preferably intended for mains supply, or a burner, preferably a gas burner.

12. A weed killing apparatus according to claims 1 to 11, **characterized** in that the mouthpiece (6) and the steam generator (1) are integral in a single portable unit.

13. A weed killing apparatus according to claims 1 to 12, **characterized** in that no nozzles or throttling is present, in particular substantial constrictions at any point, in the connection between the steam generator (1) and the chamber (11).
